# EUROPEAN PATENT APPLICATION

(11) **EP 3 733 358 A1**
(43) Date of publication of application: **04.11.2020**
(21) Application number: 18895014.1
(22) Date of filing: 19.03.2018
(51) Int. Cl.: B25J 15/08, B25B 9/00

(54) **SHEET FOR ASSEMBLING DEVICE, AND DEVICE**

(30) Priority: 26.12.2017 JP 2017249039
(71) Applicant: TOKYO METROPOLITAN PUBLIC UNIVERSITY CORPORATION, Shinjuku-ku Tokyo 1630926 (JP)
(72) Inventor: FUKAYA Naoki, Tokyo 116-8523 (JP); TEZUKA Sota, Tokyo 116-8523 (JP)
(74) Representative: Noble, Nicholas
(86) International application number: PCT/JP2018/010789
(87) International publication number: WO 2019/130606

(57) **Abstract**

This sheet for assembling a device includes: a movable mechanism body forming portion (200); a supporting body forming portion (400); and a connecting part forming portion (600) connecting and angle-adjustably holding the aforementioned bodies. The movable mechanism body forming portion includes: a base body forming portion (220) forming a base body with a bent portion; a drive body forming portion (240) disposed in parallel to the base body, forming a drive body with a bent portion; a bent portion connecting portion forming portion (260) connecting the base body and the drive body at the bent portions; and a movable mechanism base end portion forming portion (280) integrating the base body and the drive body at base ends. The supporting body forming portion includes a supporting body main body forming portion that forms a supporting body main body having a length corresponding to the movable mechanism portion.

## Description

### [Technical Field]

The present invention relates to a sheet for assembling a device capable of manufacturing a device having a complicated structure from a single sheet, and the device.

### [Background Art]

Various conventional devices have been proposed and used in various fields. For example, robot hand devices and the like are used not only in the manufacturing field but also in various places such as high-altitude places, bottom of the sea, and outer space.

However, since various devices such as conventional robot hands are configured by combining a large number of metal parts, such devices cannot be used in places where metals are not usable, and damaged parts cannot be replaced easily, requiring a considerable amount of time to repair.

### [Summary of Invention]

### [Problems to be Solved]

As described above, problems with the conventional devices are that the places in which the devices can be used are limited depending on the materials for forming the devices, and that repairs and replacements are not easily performed.

Therefore, an object of the present invention is to provide a device that has few restrictions on materials for forming the device and can be easily repaired and replaced, and a sheet for assembling a device that is capable of manufacturing such device.

### [Solution to Problems]

As a result of intensive studies to overcome the problems described above, the inventors of the present invention have discovered that the components configuring a device can be formed continuously, and as a result of studies based on this discovery, the inventors of the present invention have found out that a device can be constructed from one sheet, and consequently have completed the present invention.

The present invention provides the following inventions.
1. A sheet for assembling a device includes
   a movable mechanism body forming portion for forming a movable mechanism body,
   a supporting body forming portion for forming a supporting body, and
   a connecting part forming portion for forming a connecting part that connects the movable mechanism body and the supporting body to each other and holds the movable mechanism body and the supporting body in an angle adjustable manner.
   The movable mechanism body forming portion includes
   a base body forming portion for forming a base body having a predetermined length and having one or more bent portions,
   a drive body forming portion for forming a drive body disposed in parallel to the base body and having one or more bent portions,
   a bent portion connecting portion forming portion for forming a bent portion connecting portion for connecting the base body and the drive body to each other at the bent portions thereof, and
   a movable mechanism base end portion forming portion for forming a movable mechanism base end portion formed by integrating the base body and the drive body with each other at base ends thereof.
   The supporting body forming portion includes
   a supporting body main body forming portion for forming a supporting body main body having a length corresponding to the movable mechanism body.
2. A device formed by the sheet for assembling a device according to 1, the device includes
   a movable mechanism body,
   a supporting body, and
   a connecting part that connects the movable mechanism body and the supporting body to each other and holds the movable mechanism body and the supporting body in an angle adjustable manner.
   The movable mechanism body includes
   a base body having a predetermined length and having one or more bent portions,
   a drive body disposed in parallel to the base body and having one or more bent portions,
   a bent portion connecting portion connecting the base body and the drive body to each other at the bent portions thereof, and
   a movable mechanism base end portion integrating the base body and the drive body with each other at base ends thereof. The supporting body includes a supporting body main body having a length corresponding to the movable mechanism body, and
   the connecting part is configured to hold the movable mechanism body and the supporting body with a predetermined space therebetween.
3. A device includes
   a movable mechanism body,
   a supporting body, and
   a connecting part that connects the movable mechanism body and the supporting body to each other and holds the movable mechanism body and the supporting body in an angle adjustable manner.
   The movable mechanism body includes
   a base body having a predetermined length and having one or more bent portions,
   a drive body disposed in parallel to the base body and having one or more bent portions,
   a bent portion connecting portion connecting the base body and the drive body to each other at the bent portions thereof, and
   a movable mechanism base end portion integrating the base body and the drive body with each other at base ends thereof. The supporting body includes a supporting body main body having a length corresponding to the movable mechanism body, and
   the connecting part is configured to hold the movable mechanism body and the supporting body with a predetermined space therebetween.

### [Effects of Invention]

The sheet for assembling a device according to the present invention has few restrictions on materials for forming a device and can manufacture, anywhere, easily, and conveniently, a device that can be easily repaired and replaced.

Furthermore, the device according to the present invention has few restrictions on materials for forming the device and can easily be repaired and replaced.

### [Brief Description of Drawings]

[Fig. 1]

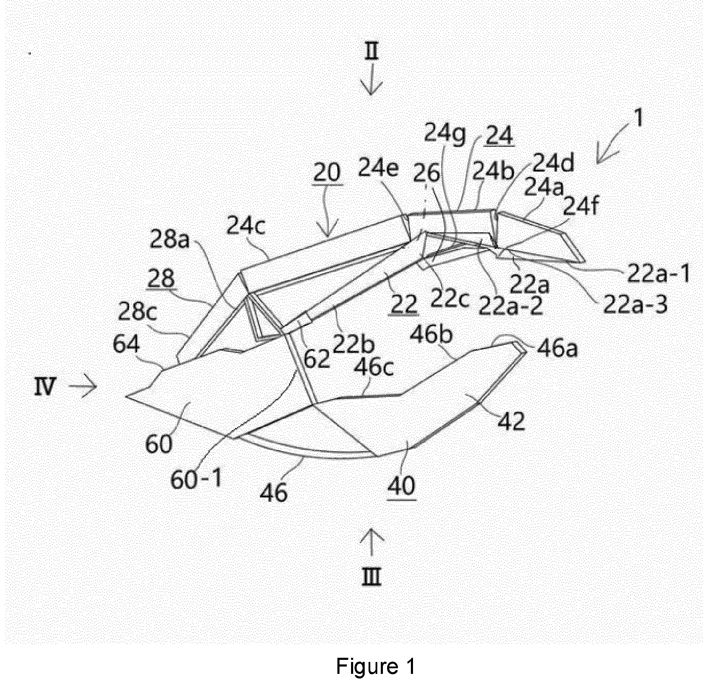

   Fig. 1 is a perspective view showing an embodiment of a device according to the present invention.
[Fig. 2]

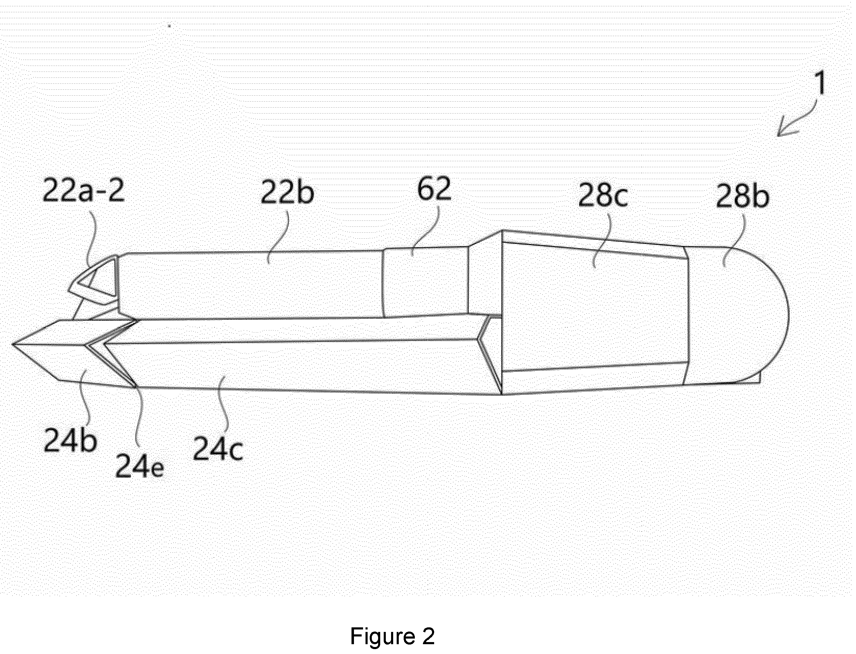

   Fig. 2 is an arrow view of the device shown in Fig. 1, taken along II.
[Fig. 3]

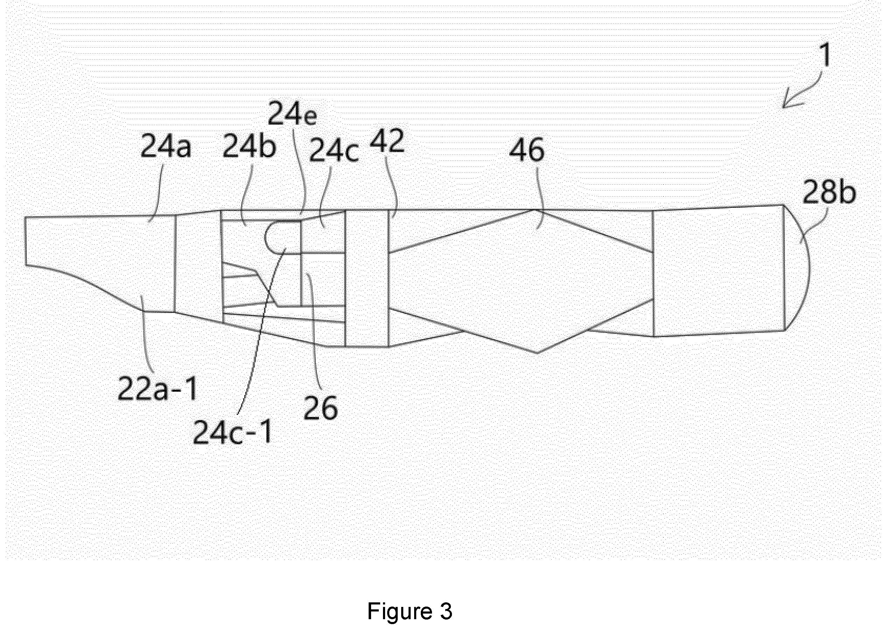

   Fig. 3 is an arrow view of the device shown in Fig. 1, taken along III.
[Fig. 4]

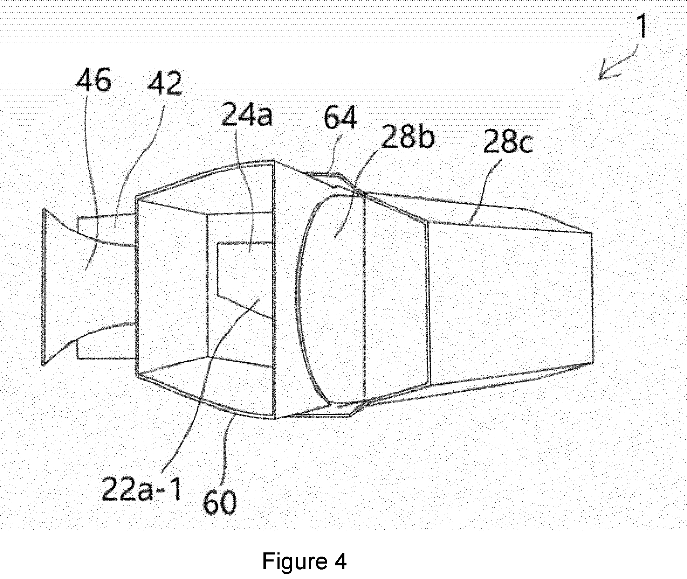

   Fig. 4 is an arrow view of the device shown in Fig. 1, taken along IV.
[Fig. 5]

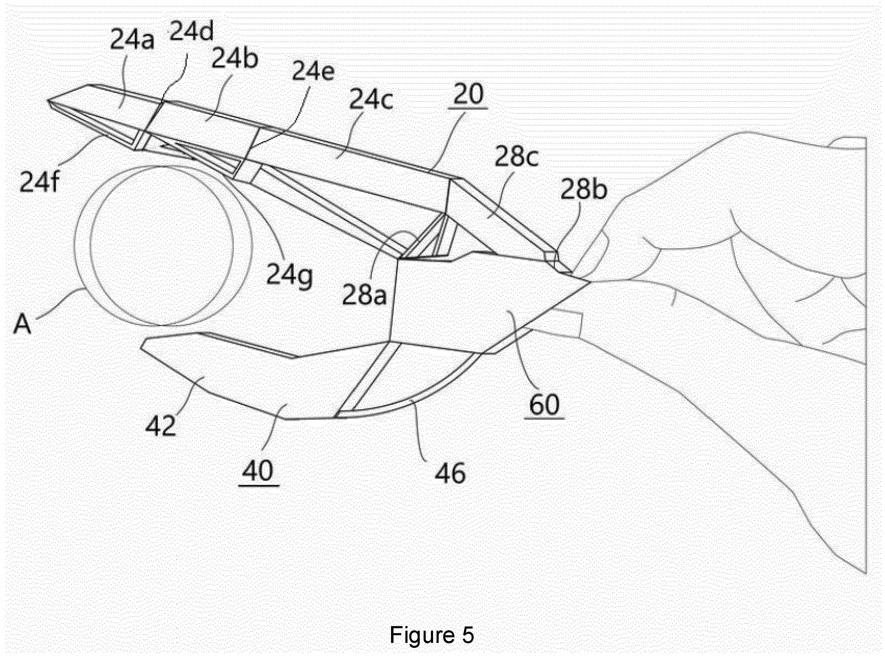

   Fig. 5 is a diagram showing usage of the device shown in Fig. 1.
[Fig. 6]

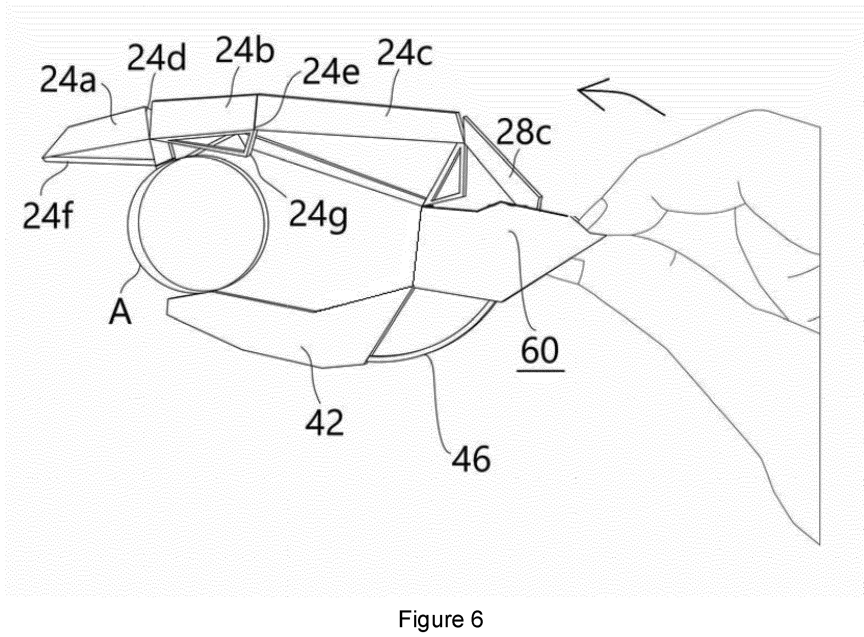

   Fig. 6 is a diagram showing usage of the device shown in Fig. 1.
[Fig. 7]

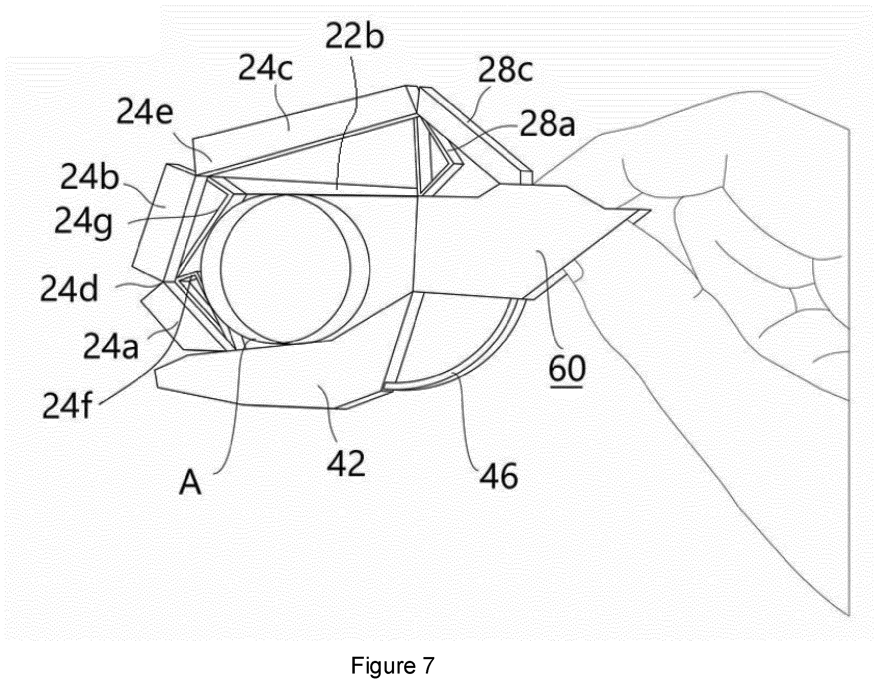

   Fig. 7 is a diagram showing usage of the device shown in Fig. 1.
[Fig. 8]

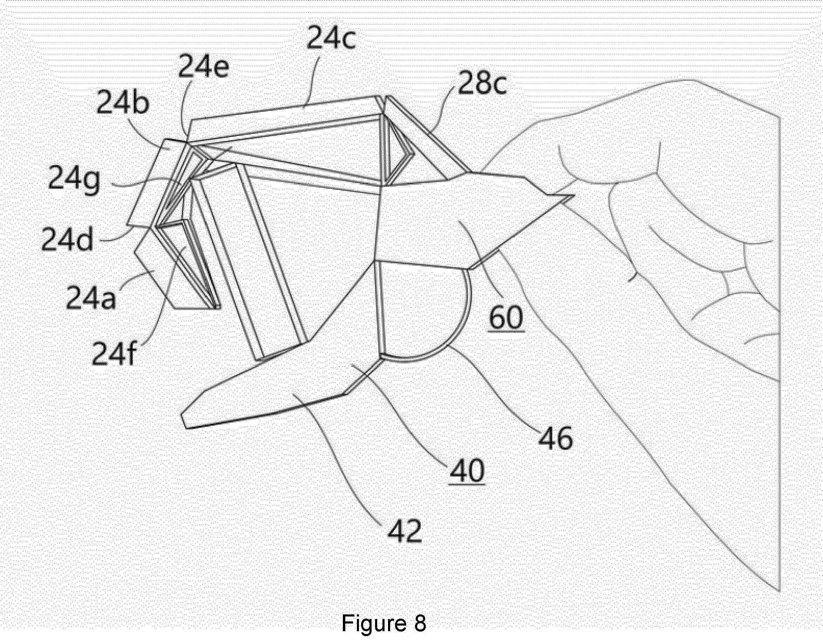

   Fig. 8 is a diagram showing usage of the device shown in Fig. 1.
[Fig. 9]

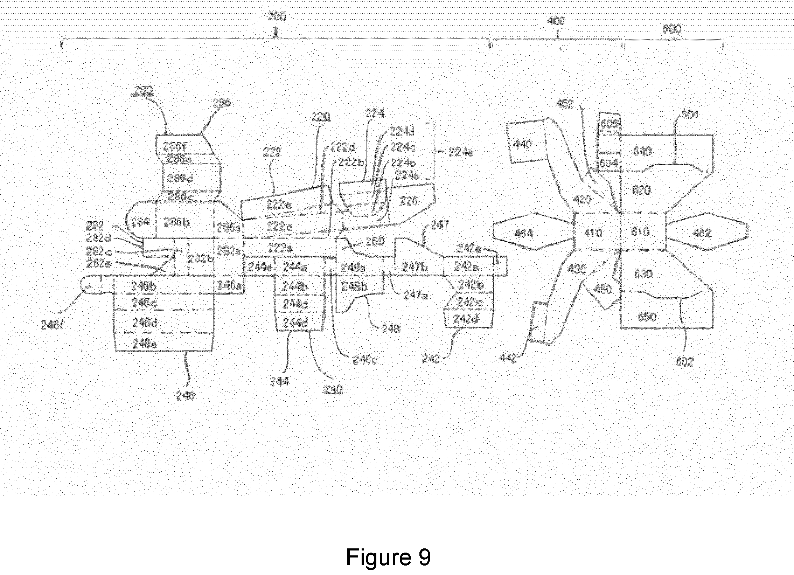

   Fig. 9 is a plan view showing an embodiment of the sheet for assembling a device according to the present invention.
[Fig. 10]

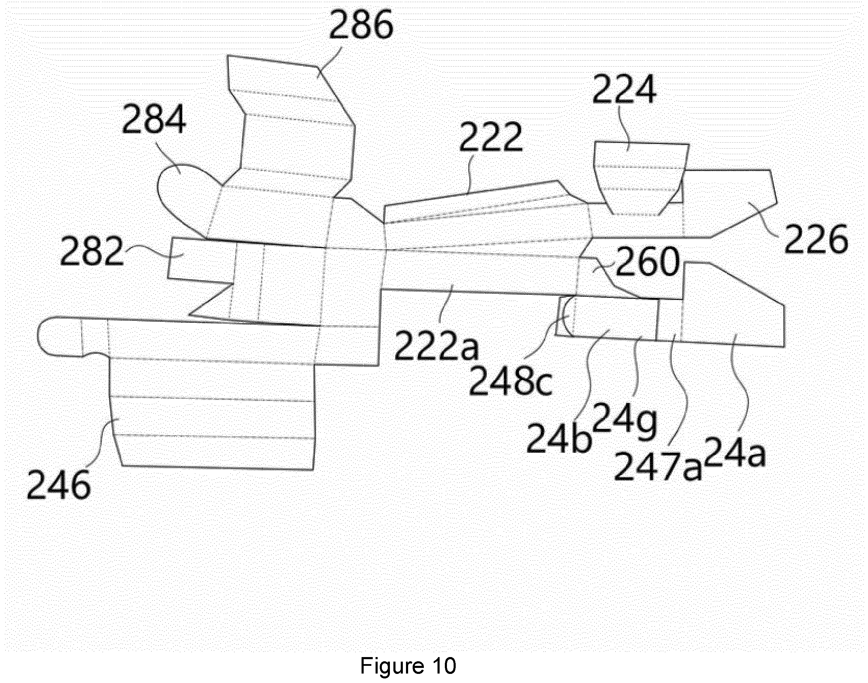

   Fig. 10 is a perspective view showing an assembly process of the sheet shown in Fig. 8.
[Fig. 11]

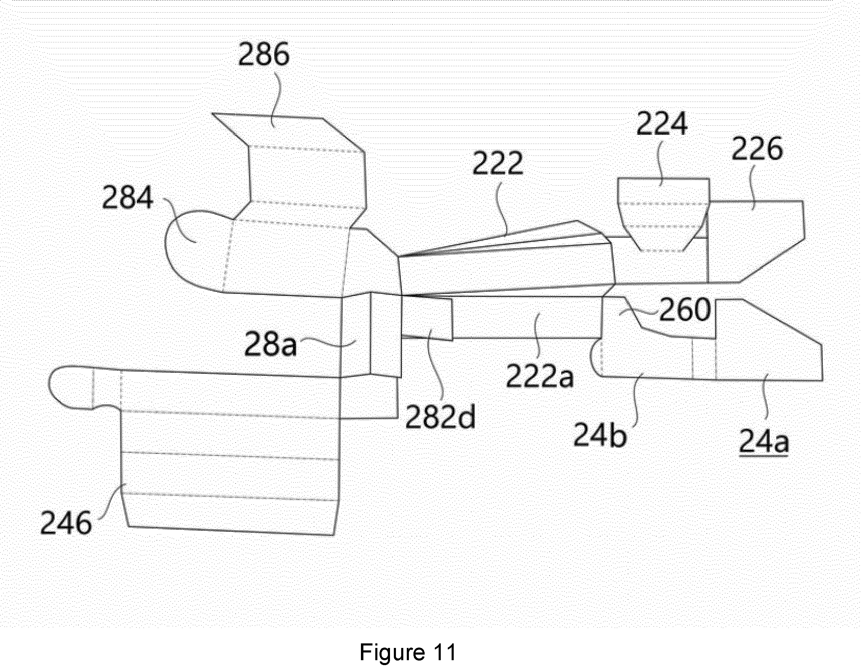

   Fig. 11 is a perspective view showing an assembly process of the sheet shown in Fig. 8.
[Fig. 12]

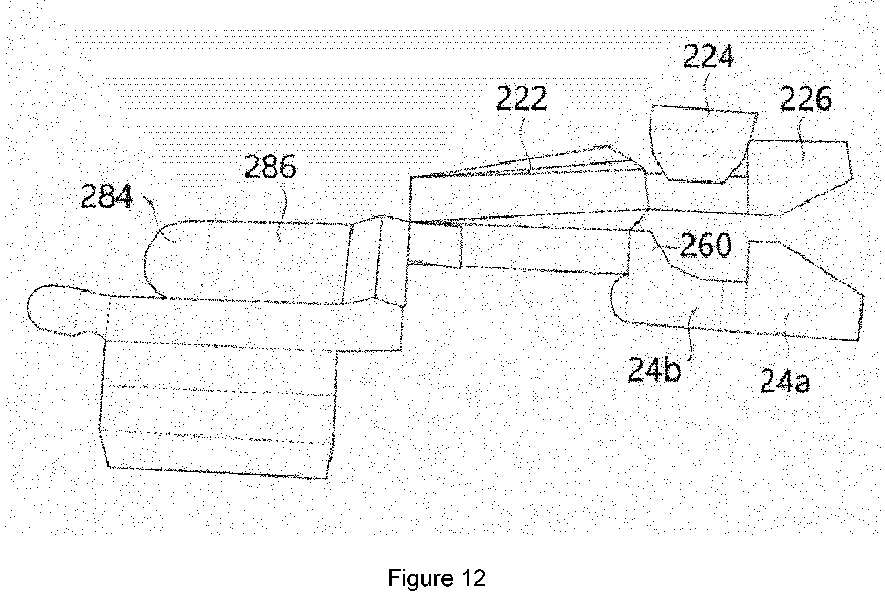

   Fig. 12 is a perspective view showing an assembly process of the sheet shown in Fig. 8.
[Fig. 13]

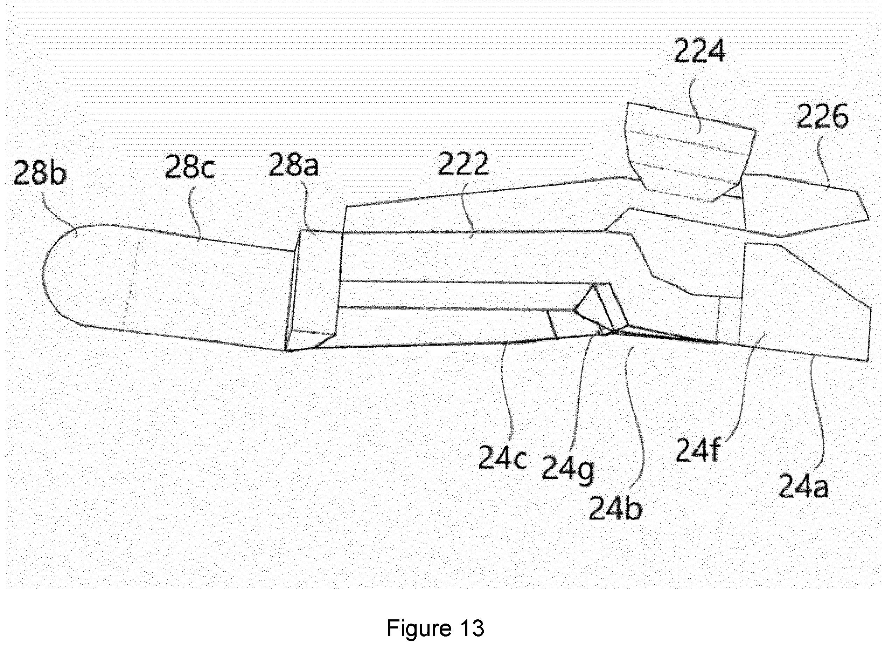

   Fig. 13 is a perspective view showing an assembly process of the sheet shown in Fig. 8.
[Fig. 14]

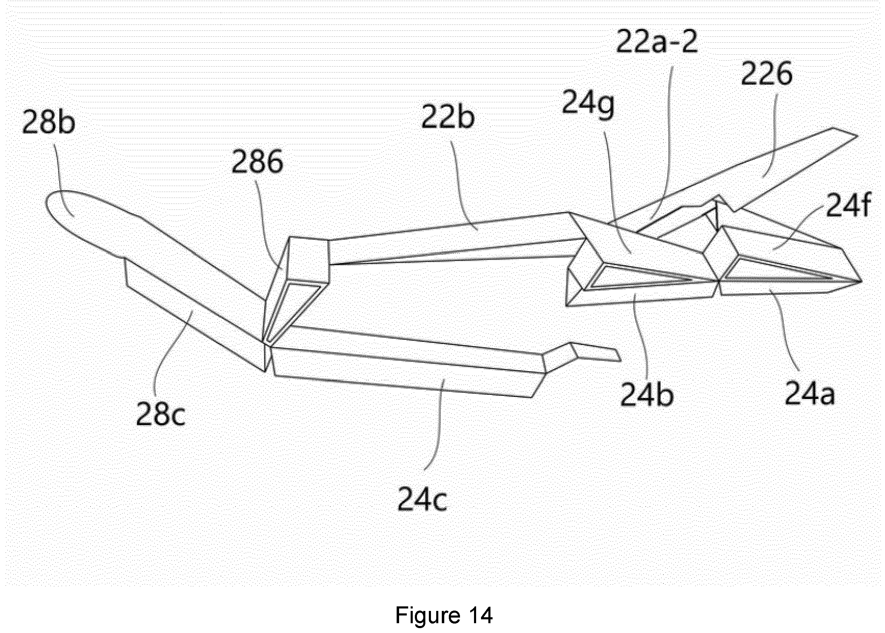

   Fig. 14 is a perspective view showing an assembly process of the sheet shown in Fig. 8.
[Fig. 15]

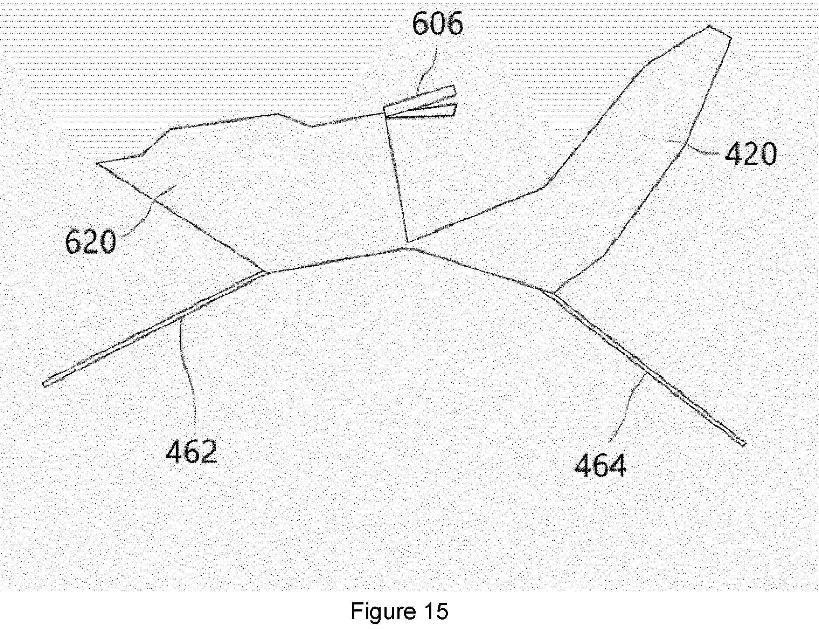

   Fig. 15 is a perspective view showing an assembly process of the sheet shown in Fig. 8.
[Fig. 16]

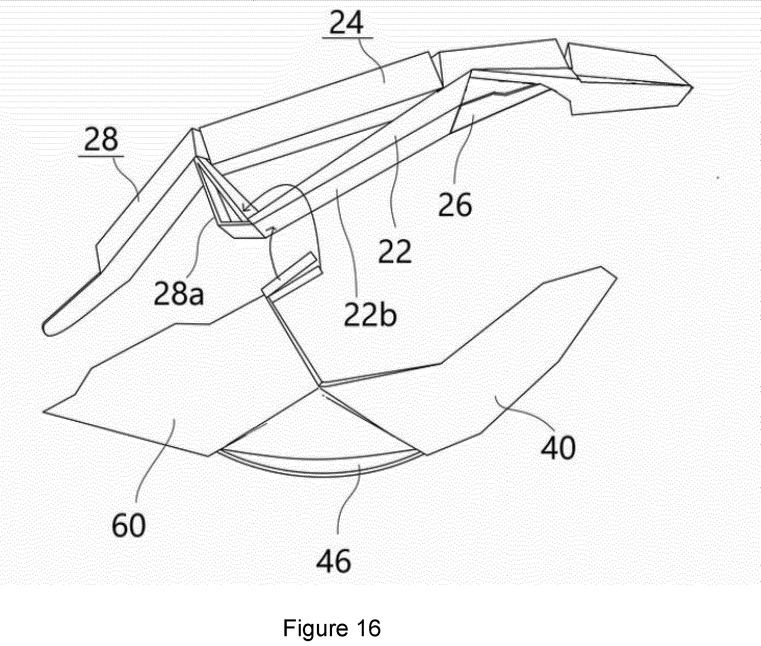

   Fig. 16 is a perspective view showing an assembly process of the sheet shown in Fig. 8.

### [Reference Numbers List]

1 Device, 20 Movable mechanism body, 40 Supporting body, 60 Connecting part, 22 Base body, 24 Drive body, 26 Bent portion connecting portion, 28 Movable mechanism base end portion, 42 Supporting body main body, 46 Elastic portion

### [Description of Embodiments]

The sheet for assembling a device and the device according to the present invention are described hereinafter in detail. The device constructed using the sheet for assembling a device of the present invention is described first.

A device 1 shown in Fig. 1 is a device for grabbing/pinching various articles, the device 1 including a movable mechanism body 20, a supporting body 40, and a connecting part 60 that connects the movable mechanism body 20 and the supporting body 40 to each other and holds the movable mechanism body 20 and the supporting body 40 in an angle adjustable manner.

In the following description, a base end means an end portion on the connecting part side, and a tip end means an end portion opposite to the connecting part. As to the connecting part, similarly, a tip end thereof faces the same direction as the tip ends of the other parts, and a base end of the same faces the same direction as the base ends of the other parts.

### <Movable mechanism body>

As shown in Figs. 1 to 4, the movable mechanism body 20 is composed of:
a base body 22 having a predetermined length and having one or more bent portions;
a drive body 24 disposed parallel to the base body 22 and having one or more bent portions;
a bent portion connecting portion 26 for connecting the base body 22 and the drive body 24 to each other at the bent portions thereof; and
a movable mechanism base end portion 28 for integrating the base body 22 and the drive body 24 with each other at base ends thereof.

The base body 22, composed of a tip end portion 22a on the tip end side and a base portion 22b on the base end side, is a portion that connects the tip end portion 22a and the base portion 22b, and is provided with one bent portion 22c forming the bent portion. Also, the tip end portion 22a is composed of a plate-shaped portion 22a-1 being plate-shaped and located at the tip end,
a reinforcement portion 22a-2 connected to the plate-shaped portion and consisting of a hollow triangular prism, and a bendable portion 22a-3 being the connection between the plate-shaped portion and the reinforcement portion.
The elongated plate-shaped base portion 22b is hollow as is formed by folding a sheet described hereinafter. Furthermore, the tip end portion 22a is thinner than the plate-shaped base portion 22b, whereby the base portion 22b can freely rotate with the bent portion 22c as a fulcrum. The bent portion 22c is formed by continuously connecting a bottom surface of the reinforcement portion 22a-2 to an edge portion of the tip end of the plate-shaped base portion 22b, the edge portion being located on the side opposite to the supporting body 40, that maximize the movement of the drive body 24.

The drive body 24 is composed of a first moving portion 24a on the tip end side, a third moving portion 24c on the base end side, and a second moving portion 24b positioned therebetween, and is provided with a first bent portion 24d connecting the first moving portion 24a and the second moving portion 24b, and a second bent portion 24e connecting the second moving portion 24b and the third moving portion 24c. The first moving portion 24a and the second moving portion 24b are of substantially the same length, but may have different lengths. In contrast, the third moving portion 24c is longer than the first moving portion 24a or the second moving portion 24b. With each bent portion, the first moving portion 24a and the second moving portion 24b are rotatable with respect to the second moving portion 24b and the third moving portion 24c, respectively, and the drive body 24 is made thicker than the base body 22 so that the drive body 24 can be prevented from bending toward the side opposite to the supporting body 40 and can be bent efficiently toward the supporting body 40. Specifically, as shown in Figs. 1 and 2, each of the first to third moving portions 24a, b, c is in the shape of a hollow prism (triangular prism in the present embodiment), and the first and second bent portions 24d, e are formed by connecting parts of the edge portions of these triangular prism-shaped bottom surfaces on the supporting body 40 side, and the first to third moving portions 24a, b, c are formed by bringing the upper portions of the triangular prism-shaped first to third moving portions 24a, b, c (i.e., at least parts of the edge portions of the triangular prism-shaped bottom surfaces except for the connected parts thereof) into abutment to have a thickness that prevents the first to third moving portions 24a, b, c from bending in a direction opposite to the supporting body. Moreover, the first moving portion 24a and the second moving portion 24b are provided with, on side surfaces thereof on the supporting body 40 side, V-shaped first moving portion auxiliary part 24f and second moving portion auxiliary part 24g for efficiently bending the bent portions. The first moving portion auxiliary part 24f and the second moving portion auxiliary part 24g are provided in such a manner that V-shaped, substantially right angle portions thereof are positioned on the supporting body 40 side. Also, the first moving portion 24a and the second moving portion 24b are connected to each other by part of the edge portions of the bottom surfaces, whereas the second moving portion 24b and the third moving portion 24c are connected to each other by attaching a connecting part 24c-1 (see Fig. 3) to an outer surface of the triangular prism-shaped body of the second moving portion 24b, the connecting part 24c-1 being provided on the bottom surface of the triangular prism-shaped body of the third moving portion 24c. The tip end portion 22a is connected to the first moving portion auxiliary part 24f at a distal end side from the first moving portion 24a of the first moving portion auxiliary part 24f, and the second moving portion auxiliary part 24g is connected to the edge portion of the base portion 22b on the supporting body 40 side at the distal end side from the second moving portion 24b.

The bent portion connecting portion 26 is provided by connecting the bent portion 22c and the second bent portion 24e to each other. As described hereinafter, the base body 22 and the drive body 24 are connected to each other at the respective bent portions 22c, 24e thereof by forming the base body 22 and the drive body 24 from a continuous sheet, that is, by forming a part of the base portion 22b of the base body 22 and a part of the second moving portion 24b of the drive body 24 from a continuous sheet.

The movable mechanism base end portion 28 formed by integrating base ends of the base body 22 and the drive body 24 is composed of a movable connecting portion 28a that connects the base body 22 and the drive body 24 in such a manner that the base ends thereof are located in different positions in a height direction, a protruding piece 28b that comes into contact with the connecting part 60 without being tightly fixed thereto, and a biasing part 28c that is located between the protruding piece 28b and the base end of the drive body 24 and connected to the top of the movable connecting portion 28a and the third moving portion 24c. Note that the protruding piece 28b may be movable along a surface of the connecting part 60. The movable connecting portion 28a is formed into a triangular prism (equilateral triangle in the present embodiment) so as to be able to fix the base body 22 and the drive body 24 in a stable manner, and is formed so as the smallest surface (side surface) of the triangular prism to be positioned on the connecting part 60 side. The biasing part 28c is a hollow quadrangular prism and has substantially the same height as the third moving portion 24c.

A triangle is formed by the base portion 22b, the third moving portion 24c, and the movable connecting portion 28a when viewed laterally, by connecting the tip end side of the third moving portion 24c and the tip end side of the base portion 22b to each other using the bent portion connecting portion 26 and by connecting the base end side of the third moving portion 24c and the base end side of the base portion 22b to each other using the movable connecting portion 28a in such a manner that the base ends are located in different positions in the height direction. Since this triangle is configured so as to be deformable within a range in which the base portion 22b, the third moving portion 24c, and the movable connecting portion 28a virtually do not deflect (a small degree of deflection is inevitable depending on the materials for configuring the base portion 22b, the third moving portion 24c, and the movable connecting portion 28a), the force applied to the third moving portion 24c is transmitted appropriately to the second moving portion 24b, the first moving portion 24a, and the like.

### <Supporting body>

The supporting body 40 is composed of a supporting body main body 42 having a length corresponding to the movable mechanism body 20, and, in the present embodiment, has an elastic portion 46 that is connected to the connecting part 60 and biases the supporting body main body 42.

The supporting body main body 42 is in the shape of a thumb of a human and has a thick base end and a thin tip end. The supporting body main body 42 is provided with three inclined portions 46a, b, c from the base end to the tip end, forming a wave. Accordingly, by acting with the movable mechanism body, any object can be pinched easily.

The elastic portion 46 is formed by providing a single sheet in an arc shape, between the base end of the supporting body main body 42 on the side opposite to the movable mechanism body 20 and the base end of the connecting part, the sheet being described hereinafter. Accordingly, connecting the supporting body 40 and the connecting part 60 to each other causes the elastic portion 46 to act as a plate spring, so that when a force acting in the direction opposite to the movable mechanism body 20 is biased to the supporting body main body 42, the supporting body main body 42 is biased in the direction opposite thereto, whereby an object can be pinched in a favorable manner.

### <Connecting part>

The connecting part 60 is configured to hold the movable mechanism body 20 and the supporting body 40, with a predetermined space therebetween. The connecting part 60 is a hollow quadrangular prism and is provided with a taper at the base end thereof tapering from the supporting body 40 side toward the movable mechanism body 20 side. The base end of the supporting body 40 and a tip end 60-1 of the connecting part 60 are connected to each other directly, and the base end of the movable mechanism body 20 and the tip end of the connecting part 60 are connected to each other by fixing a fixing part 62 to the base end 22b of the base body 22, the fixing part 62 being provided at the tip end 60-1 of the connecting part 60, at a position different from (or away from) the connecting position between the supporting body 40 and the connecting part 60. Thus, the movable mechanism base end portion 28 is in contact with the connecting part 60 in a free state. Since the movable mechanism base end portion 28 is in contact with the connecting part 60 in a free state, the angle of the movable mechanism body 20 with respect to the supporting body 40 can freely be adjusted by moving the position of the movable mechanism base end portion 28 on the connecting part 60. Moreover, auxiliary walls 64 are provided on both left and right sides (i.e., the positions sandwiching the movable mechanism base end portion 28) of a surface of the connecting part 60 at the movable mechanism body 20 side, so that the movable mechanism base end portion 28 can be moved without stress.

### <Effects>

When using the device, the device can be operated using various driving members such as a servomotor, and how the device is operated by human fingers is described using Figs. 5 to 8.

As shown in Fig. 5, a thumb is inserted into the base end of the connecting part 60, and an index finger presses the protruding piece 28b that is brought into abutment with the connecting part 60. Then, when pinching a circular object to be pinched A at the tip end side, the object to be pinched A is placed in the position where the object to be pinched A comes into abutment with a tip end portion of the supporting body main body 42 as shown in Fig. 6, and then the index finger is moved so as to push the index finger toward the tip end side, thereby pushing the protruding piece 28b (not shown) and the biasing part 28c toward the tip end, and consequently, the third moving portion 24c is pushed toward the tip end side, and the second moving portion 24b and the first moving portion 24a are moved toward the supporting body 40, with the second bent portion 24e as a fulcrum, in accordance with the shape of the object to be pinched A, and then the position of the supporting body is kept against the pinching pressure by taking advantage of the action of the elastic portion 46, whereby the object to be pinched A can be pinched. Moreover, in order to hold the object to be pinched A tight, the protruding piece 28b and the biasing part 28c can be pushed toward the tip end side by placing the object to be pinched A on the base portion 22b side and pushing the index finger as shown in Fig. 7. Then the third moving portion 24c is pushed toward the tip end side. In accordance with the shape of the object to be pinched A, the second moving portion 24b with the second bent portion 24e as a fulcrum is moved, and the first moving portion 24a with the first bent portion 24d as a fulcrum is moved toward the supporting body 40 side, so as to hold the object to be pinched A in such a manner to wrap the entire object to be pinched A. Not only the circular object to be pinched A but also a rectangular object to be pinched B shown in Fig. 8 can be held in the same manner of pinching as shown in Fig. 6 and in the same manner of wrapping as shown in Fig. 7.

### <Sheet>

The sheet for assembling a device of the present invention is described next.

As shown in Fig. 9, a sheet 100 of the present invention, which includes
a movable mechanism body forming portion 200 for forming the movable mechanism body 20 (see Figs. 1 to 4. The same applies to two-digit numbers hereinafter),
a supporting body forming portion 400 for forming the supporting body 40,
a connecting part forming portion 600 for forming the connecting part 60 connecting the movable mechanism body 20 and the supporting body 40 to each other and holding the movable mechanism body 20 and the supporting body 40 in an angle adjustable manner,
is formed by line drawing on a single sheet.

The movable mechanism body forming portion 200 is composed of a base body forming portion 220 that forms the base body 22 having a predetermined length and one or more bent portions, a drive body forming portion 240 that forms the drive body 24 disposed in parallel to the base body and having one or more bent portions, a bent portion connecting portion forming portion 260 that forms the bent portion connecting portion 26 connecting the base body and the drive body to each other at the bent portions thereof, and a movable mechanism base end portion forming portion 280 that forms the movable mechanism base end portion 28 formed by integrating the base body and the drive body with each other at the base ends thereof, and the supporting body forming portion 400 includes a supporting body main body forming portion that forms the supporting body main body 42 having a length corresponding to the movable mechanism body, and elastic portion forming portions 462, 464 that form the elastic portion 46 connected to the connecting part and biasing the supporting body main body.

Note, in Fig. 9, that the solid lines represent cut lines, the dashed lines represent mountain folds, and the dotted lines represent valley folds.

### (Movable mechanism body forming portion)

As shown in Fig. 9, the base body forming portion 220 is composed of a base portion forming portion 222 and a tip end portion forming portion 224. The base portion forming portion 222 includes a rectangular front surface portion 222a, a triangular first side surface portion 222b connected to the front surface portion 222a, a rear surface portion 222c connected to the first side surface portion 222b, a triangular second side surface portion 222d connected to the rear surface portion 222c, and a margin portion 222e connected to the second side surface portion 222d.

The tip end portion forming portion 224 is connected to the rear surface portion 222c of the base portion forming portion 222, and has a reinforcement portion forming portion 224e composed of a front surface portion 224a, a first side surface 224b continuing from a width-direction central portion of the front surface portion 224a, a second side surface 224c connected to the first side surface 224b, and a margin portion 224d connected to the second side surface 224c. Furthermore, a pentagonal plate-shaped body forming portion 226 is provided on the front surface portion 224a at the opposite side of the rear surface portion 222c. This plate-shaped body forming portion 226 is also a part that is attached to a first surface 242a of a first moving portion forming portion 242 to form the first moving portion auxiliary part 24f, the first moving portion forming portion 242 being described hereinafter.

The movable mechanism base end portion forming portion 280 is composed of a movable connecting portion forming portion 282 connected to an edge of the front surface portion 222a of the base portion forming portion 222, a biasing part forming portion 286 connected to the movable connecting portion forming portion 282, and a semi-elliptical protruding piece forming portion 284. The movable connecting portion forming portion 282 is composed of a rectangular front surface 282a connected to the front surface portion 222a of the base portion forming portion 222, a rear surface 282b connected to this front surface 282a, a side surface 282c connected to the rear surface 282b, and a rectangular first margin 282d and a triangular second margin 282e that are connected to the side surface 282c. The biasing part forming portion 286 is composed of a base portion 286a connected to a side rim of the front surface 282a, a front surface 286b of the biasing part that is connected to the base portion 286a, a first side surface 286c connected to the front surface 286b, a rear surface 286d connected to the first side surface 286c, a second side surface 286e connected to the rear surface 286d, and a margin 286f connected to the second side surface 286e.

The drive body forming portion 240 is composed of a third moving portion forming portion 246, a second moving portion forming portion 244, and a first moving portion forming portion 242. The third moving portion forming portion 246 is composed of a first margin 246a connected to the front surface 282a of the movable connecting portion forming portion 282, a first surface 246b connected to the first margin 246a, a second surface 246c connected to the first surface 246b, a third surface 246d connected to the second surface 246c and wider than the first surface 246b and the second surface 246c, a second margin 246e connected to the third surface 246d, and a third margin 246f connected to an edge of the first surface 246b and formed so as to be bendable.

The second moving portion forming portion 244 is connected to the front surface portion 222a of the base portion forming portion 222 via the second moving portion auxiliary part forming portion 248. The second moving portion auxiliary part forming portion 248 is composed of a main body first surface 248a connected to the front surface portion 222a of the base portion forming portion 222, a main body second surface 248b having the same shape as the main body first surface 248a, and a height forming portion 248c located on a base end side of the main body first surface 248a. The second moving portion forming portion 244 is connected to this height forming portion 248c, the second moving portion forming portion 244 being composed of a first surface 244a connected to the height forming portion 248c, a second surface 244b connected to the first surface 244a, a third surface 244c connected to the second surface 244b, a first margin 244d connected to the third surface 244c, and a second margin 244e connected to an edge of the first surface 244a.

A first moving portion auxiliary part forming portion 247 is composed of a height forming portion 247a connected to the main body first surface 248a of the second moving portion auxiliary part forming portion 248, and a first surface 247b connected to the height forming portion 247a. The first moving portion forming portion 242 is composed of the first surface 242a connected to the first surface 247b, a second surface 242b connected to the first surface 242a, a third surface 242c connected to the second surface 242b, a first margin 242d connected to the third surface 242c, and a second margin 242e connected to the first surface 242a.

### (Supporting body forming portion)

The supporting body forming portion 400 and the connecting part forming portion 600 are formed as a single part, and the connecting part forming portion 600 is provided in such a manner as to be connected to the first elastic portion forming portion 462. The connecting part forming portion 600 is composed of a short surface 610 connected to the first elastic portion forming portion 462, a first side surface 620 and a second side surface 630 that are connected respectively to both the left and right sides of the short surface 610, a first long surface 640 connected to the first side surface 620, and a second long surface 650 connected to the second side surface 630. The connection between the first side surface 620 and the first long surface 640 and the connection between the second side surface 630 and the second long surface 650 are provided with mountain-shaped scored lines 601, 602. The supporting body forming portion 400 is connected to the short surface 610. Specifically, the supporting body forming portion 400 is composed of a first surface 410 connected to the short surface 610, first and second side surfaces 420, 430 connected respectively to both the left and right sides of the first surface 410, a second elastic portion forming portion 464 connected to an edge of the short first surface 410, a supporting surface forming portion 440 connected to a tip end side of the first side surface 420, a first margin 442 provided at a tip end of the second side surface 430, a reinforcement portion 450 provided at a tail base end side of the second side surface 430, and a second margin 452 provided at a base end of the first side surface 420. An edge of the first long surface 640 is provided with a rectangular first margin 604 and a second margin 606 that is independent of the first margin 604 and can be folded into a C-shape.

### <Material, manufacture>

Materials for forming the sheet are not particularly limited as long the materials can be folded, the materials including paper, plastic, leather, various films, and metal. The thickness and size of the sheet are also not particularly limited.

The sheet of the present invention can be manufactured by printing line drawings including predetermined contour lines, dotted lines and the like on a sheet made of various materials by using an inkjet-type or laser-type printer.

### <Assembly, effects>

A method for assembling the sheet of the present embodiment, that is, a method for manufacturing the device of the foregoing embodiment, is described hereinafter. Note that the order of formation is merely an example; the device may be assembled in another assembly order.

First, as shown in Fig. 10, the second moving portion forming portion 244 is folded to form the second moving portion 24b. In other words, starting from the first margin 244d, the second moving portion forming portion 244 is folded and the first margin 244d is attached to the first surface 244a to form a triangular prism. The second moving portion auxiliary part forming portion 248 is folded to integrate, and then the height forming portion 248c is folded to attach the second margin 244e to the second moving portion auxiliary part forming portion 248. In so doing, starting from the first margin 242d, the first moving portion forming portion 242 is also folded and the first margin 242d is attached, to form the first moving portion 24a.

Next, as shown in Fig. 11, the movable connecting portion forming portion 282 of the movable mechanism base end portion forming portion 280 is folded, to attach the first margin 282d to the front surface portion 222a of the base portion forming portion 222 and attach the second margin 282e to the front surface 282a. Then, as shown in Fig. 12, the margin 286f of the biasing part forming portion 286 is folded, and the margin 286f is then attached to the front surface 286b.

Subsequently, as shown in Fig. 13, the third moving portion forming portion 246 is folded. Specifically, the first surface 246b, the second surface 246c, and the third surface 246d of the third moving portion forming portion 246 are folded, and the second margin 246e is attached to the first surface 246b, to form a triangular prism. Then, the entire triangular prism is folded toward the movable mechanism base end portion forming portion 280, attaching the first margin 246a to the movable mechanism base end portion forming portion 280, and then the triangular prism shaped-body is folded to attach only a tip end side of the third margin 246f to an outer surface of the triangular prism-shaped body of the second moving portion 24b, to connect the second moving portion 24b and the third moving portion 24c to each other.

As a result, the drive body 24 is completed.

In addition, as shown in Fig. 14, the base body forming portion 220 is folded. Specifically, the base portion forming portion 222 is folded to attach the margin portion 222e to the front surface portion 222a, then each surface of the tip end portion forming portion 224 is folded to attach the margin portion 224d to the front surface portion 224a connected to the first side surface, and the plate-shaped body forming portion 226 is attached to the first surface 247b of the first moving portion forming portion 242.

The movable mechanism body 20 is completed by the foregoing assembly operation.

The supporting body 40 and the connecting part 60 are assembled next. As shown in Fig. 15, the short surface 610, the first side surface 620, and the second side surface 630 are folded, to stack and attach the first long surface 640 and the second long surface 650 to each other. Further, the first and second side surfaces 420, 430 of the supporting body forming portion 400 are folded separately, to attach the margins 442, 452.

Then, the first and second elastic portion forming portions 462, 464 are attached, completing the supporting body 40.

Finally, as shown in Fig. 16, the first margin 604 of the connecting part 60 is attached to the movable connecting portion, and the second margin 606 is attached to the base end of the base portion so as to wrap the second margin 606 therearound.

The sheet of the present embodiment is made out of paper, and an adhesive is used to attach each margin. Any adhesion method can be used for adhering/attaching, and not only various adhesives but also heating, welding and the like can be used depending on the material of the sheet.

Note that the sheet for assembling a device and the device according to the present invention are not limited to those of the foregoing embodiment, and the present invention can be modified in various ways within the scope of the present invention.

For example, the device of the present invention described above may be formed by connecting the separately produced parts by means of adhesion using welding or an adhesive without using the sheet of the present invention described above.
In addition, in a case where a plurality of bent portions exist, it is sufficient that at least one of the bent portions be connected, and all of the plurality of bent portions do not need to be connected.

The thickness of the tip end portion 22a of the base portion 22b does not need to be smaller than the thickness of the base portion 22b. Moreover, the device of the present invention described above may be constructed so as to be entirely or partially in the form of an assembled device by means of a method of pouring a material such as resin into a mold, without using the sheet of the present invention described above.

Furthermore, the elastic portion 46 described above does not need to be provided.

Also, an example in which the supporting body is configured without any movable mechanism has been described above, but the configuration of the supporting body is not limited thereto; the movable mechanism body can be installed as the supporting body, and the supporting body can be configured with two movable mechanism bodies.

In addition, the movable mechanism body and the supporting body can be connected to a drive mechanism such as a motor so as to be configured to operate automatically.

## Claims

1. A sheet for assembling a device comprising:
a movable mechanism body forming portion for forming a movable mechanism body;
a supporting body forming portion for forming a supporting body; and
a connecting part forming portion for forming a connecting part that connects the movable mechanism body and the supporting body to each other and holds the movable mechanism body and the supporting body in an angle adjustable manner,
wherein the movable mechanism body forming portion includes:
a base body forming portion for forming a base body having a predetermined length and having one or more bent portions;
a drive body forming portion for forming a drive body disposed in parallel to the base body and having one or more bent portions;
a bent portion connecting portion forming portion for forming a bent portion connecting portion for connecting the base body and the drive body to each other at the bent portions thereof; and
a movable mechanism base end portion forming portion for forming a movable mechanism base end portion by integrating the base body and the drive body with each other at base ends thereof,
and the supporting body forming portion includes a supporting body main body forming portion for forming a supporting body main body having a length corresponding to the movable mechanism body.

2. A device formed by the sheet for assembling a device according to Claim 1, the device comprising:
a movable mechanism body;
a supporting body; and
a connecting part that connects the movable mechanism body and the supporting body to each other and holds the movable mechanism body and the supporting body in an angle adjustable manner,
wherein the movable mechanism body includes:
a base body having a predetermined length and having one or more bent portions;
a drive body disposed in parallel to the base body and having one or more bent portions;
a bent portion connecting portion connecting the base body and the drive body to each other at the bent portions thereof; and
a movable mechanism base end portion integrating the base body and the drive body with each other at base ends thereof,
and the supporting body includes a supporting body main body having a length corresponding to the movable mechanism body, and
the connecting part is configured to hold the movable mechanism body and the supporting body with a predetermined space therebetween.

3. A device comprising:
a movable mechanism body;
a supporting body; and
a connecting part that connects the movable mechanism body and the supporting body to each other and holds the movable mechanism body and the supporting body in an angle adjustable manner,
wherein the movable mechanism body includes:
a base body having a predetermined length and having one or more bent portions;
a drive body disposed in parallel to the base body and having one or more bent portions;
a bent portion connecting portion connecting the base body and the drive body to each other at the bent portions thereof; and
a movable mechanism base end portion integrating the base body and the drive body with each other at base ends thereof, and
the supporting body includes a supporting body main body having a length corresponding to the movable mechanism body, and
the connecting part is configured to hold the movable mechanism body and the supporting body with a predetermined space therebetween.
